# EUROPEAN PATENT SPECIFICATION

(11) **EP 1 710 258 B1**
(45) Date of publication and mention of the grant of the patent: **04.08.2010**
(21) Application number: 05701659.4
(22) Date of filing: 05.01.2005
(51) Int. Cl.: C08F 2/22, C08F 2/24

(54) **METHOD FOR THE PREPARATION OF RESIN-REINFORCED AQUEOUS POLYMERIC DISPERSIONS**
VERFAHREN ZUR HERSTELLUNG HARZVERSTÄRKTER WÄSSRIGER POLYMERER DISPERSIONEN
PROCEDE DE PREPARATION DE DISPERSIONS POLYMERES AQUEUSES RENFORCEES AVEC DE LA RESINE

(30) Priority: 07.01.2004 ES 200400021
(43) Date of publication of application: 11.10.2006
(73) Proprietor: UNIVERSIDAD DEL PAIS VASCO-EUSKAL HERRIKO UNIBERSITATEA, 48940 Leioa (ES)
(72) Inventor: DO AMARAL MARTINS, Marcelo, E-48940 LEIOA (Vizcaya) (ES); ASUA GONZALEZ, Jose, Maria, E-48940 LEIOA (Vizcaya) (ES)
(74) Representative: Carpintero Lopez, Francisco
(86) International application number: PCT/ES2005/000004
(87) International publication number: WO 2005/066217

(56) References cited:
- ES-A1- 8 501 417
- US-A- 5 990 221
- US-A1- 2002 131 941

## Description

### Field of the technique

The present invention relates to the field of polymer dispersions, more specifically a procedure for the preparation of resin-fortified aqueous polymer dispersions with enhanced physical and colloidal properties. Specifically, it relates to a procedure for the preparation of resin-fortified aqueous polymer dispersions comprising two stages: one first step with mini-emulsion polymerisation and a second step of conventional emulsion polymerisation.

### State of the art

The preparation of aqueous polymer dispersion preparations by the technique called "mini-emulsion polymerisation" has been known for several years. This mini-emulsion polymerisation involves major advantages over conventional emulsion polymerisation such as the possibility to encapsulate or even to add hydrophobic components to the polymer during polymerisation. Mini-emulsion polymerisation requires the presence, in addition to monomers, of water and the surfactant used in conventional emulsion polymerisation, an additional component which stabilises the emulsion droplets formed during the mini-emulsion process and before and during the polymerisation process. These additional components, sometimes called co-stabilisers, are usually hydrophobic components with a very low or no water-solubility and a good miscibility with the monomer. Patent application WO 0029451 and patent US 5,686,518 describe a number of hydrophobic components that are suitable for the stabilisation of mini-emulsions. In addition to these hydrophobic components, the mini-emulsions described therein require a surfactant such as sodium lauryl sulphate or other alkyl sulphates, sodium dodecyl benzene sulphonate or other alkyl or aryl sulphonates, sodium stearate or other fatty acid salts, or polyvinyl alcohol, in order to stabilise the emulsion droplets before and during the polymerisation process, and the polymer particles obtained after polymerisation.

The preparation of aqueous polymer dispersions by the technique called "emulsion polymerisation" is also known for several years. This technology is widely covered by multiple sources and is well known in industrial practice.

On the other hand, the preparation of aqueous resin-fortified polymer dispersions is also known in the state of the art. Specifically, patents US 4,839,413 and US 4,954,558 describe a procedure for the preparation of resin-fortified emulsion polymers by the addition of low-molecular weight resin during the emulsion polymerisation procedure. However, the resulting fortified latexes show a limited solid content.

Furthermore, the general conditions used for the preparation of these fortified latexes are the object of research by Lee et al. (see Lee Y.D., Hwu H.D., J. Polym. Res. 7(2), 115 (2000); Lee Y.D., Hwu H.D., Polymer 41, 5695 (2000); and Lee Y.D. et al., Colloids Surf. A. Phys Chem. Eng. Asp. 153, 89 (1999)).

Resin-fortified aqueous polymer dispersions are obtained with these conventional polymerisation techniques, with a solid content of approximately 50% by weight, using a limited range of ASR (alkali soluble resins) resin types in neutralised form at a concentration of 30-43%, in weight based on the total weight of monomer used in polymerisation.

In the European patent application under file of the present inventors EP 030032805.4 a procedure is described for the preparation of resin-fortified aqueous dispersions by mini-emulsion polymerisation, that reduces the minimum amount of ASR resin required to obtain a stable latex with a content in solids of 50% in weight, and where a higher range of ASR resins can be used. Furthermore, this procedure does not use surfactants or they are used at very low amounts. However, the resulting fortified latexes have such a viscosity value that they show poor characteristics with regard to substrate redispersibility and wetting.

Therefore, the current technologies for the preparation of resin-reinforced aqueous polymer dispersions show the following disadvantages:
- The fortified latex obtained has a limited solid concentration as well as a viscosity that makes it inappropriate in the printing industry;
- the type of ASR resins that can be used is restricted;
- a high quantity of ASR resin is used.

Surprisingly, the present authors have discovered that a two-step combined process, that is, a first mini-emulsion polymerisation step and a second conventional emulsion polymerisation step, allows obtaining resin-fortified aqueous polymer dispersions with enhanced mechanical, physical, and colloidal properties. Therefore, the resulting fortified latexes show a high solid content, an appropriate viscosity and good properties with regard to substrate redispersibility and wetting, as well as other characteristics including enhanced gloss, pigment wetting dispersibility, block resistance, improved substrate wetting, outstanding mechanical and shear stability, high freeze/thaw stability, and high polymer volume fraction. These characteristics provide them with special advantages for their use in graphic arts and other similar coating applications.

In addition, the procedure for preparation of resin-fortified aqueous polymer dispersions according to the invention allows for a better control of viscosity, requires a lower total amount of low molecular weight resin and a high variety of types of these resins can be used (i.e., a high flexibility in the use of types and concentration of the main raw materials used in the process), with the attendant technical and economic advantages (lower unit cost, better of use of the productivity installed).

### Object of the invention

The present invention has the aim of providing a procedure for the preparation of a resin-fortified aqueous polymer dispersion.

### Description of the invention

The present invention provides a procedure for the preparation of a resin-fortified aqueous polymer dispersion, **characterised in that** it comprises the following steps:
i) mini-emulsion polymerisation, and
ii) emulsion polymerisation.

The (i) mini-emulsion polymerisation step comprises the steps of:
(a) forming a mixture comprising water, at least one amphiphilic stabilising polymer, at least one hydrophobic co-stabiliser, and at least one α,β-ethylenically unsaturated monomer.
(b) subjecting the mixture formed in (a) to homogenisation so as to form a mini-emulsion comprising stabilised droplets with an average diameter of 10-1000 nm and which comprise at least one hydrophobic co-stabiliser and at least one α,β-ethylenically unsaturated monomer, dispersed in an aqueous phase;
(c) polymerising the monomer within the droplets to obtain an aqueous polymer dispersion.

Once the aqueous polymer dispersion or latex is prepared, the second step of the resin-fortified aqueous polymer dispersion is carried out. Therefore, step (ii) of emulsion polymerisation comprises the following steps:
(d) charging a reactor with the aqueous polymer dispersion obtained in step (c);
(e) charging then in this reactor at least one α,β-ethylenically unsaturated monomer, at least one amphiphilic stabilising polymer and at least one free-radical generator;
(f) polymerising the mixture obtained in step (e).

The addition of the compounds of step (e) is carried out as pre-emulsion or in separate streams, preferably in separate streams. In the event of adding them in pre-emulsion, this should be previously have been subjected to a homogenisation process. In a preferred embodiment, step (ii) of emulsion polymerisation will be carried out semicontinuously adding the compounds of step (e) in separate streams.

The use of stabilising amphiphilic copolymer as defined in the present application enables the preparation of stable mini-emulsions without the need to add conventional surfactants such as alkyl, aryl, alkyl-aryl and aryl-alkyl sulphates and sulphonates.

In a particular embodiment, the amphiphilic stabilising polymer has an average molecular weight in number, Mn, of 800-100000, preferably of 900-50,000, more preferably 1000-25000; and an acidity index of 50-400 mg KOH/g, preferably 100-350 mg KOH/g, more preferably 150-300 mg KOH/g. The acid number is defined as the amount of potassium hydroxide (expressed in milligrams) necessary to neutralise completely one gram of polymer.

The amphiphilic stabilising polymer used in the invention procedure exhibits an adequate balance of hydrophobicity and hydrophilicity such that it is suited for the stabilisation of oil-in-water emulsions. Therefore, in a particular embodiment, the amphiphilic stabilising polymer is a polymer derived from a combination of hydrophobic monomers and hydrophilic monomers incorporating acid functions or functions leading thereto. Suitable amphiphilic polymers for the procedure of the present invention have a glass transition temperature, Tg, in the range of -60 °C to 150 °C, preferably above room temperature, more preferably in the range of 80 °C to 130 °C.

In a preferred embodiment, the amphiphilic stabilising polymer is a combination of an ethylenically unsaturated hydrophobic monomer and an ethylenically unsaturated hydrophilic monomer with functions of carboxylic acid, sulphonic acid, carboxylate, sulphonate, phosphate, phosphonate or anhydride optionally hydrolysed or modified by an alcohol or an amine. In another preferred embodiment, the amphiphilic stabilising polymer is a combination of a polyurethane with a polyester with acid function.

Preferably, the amphiphilic stabilising polymer is a copolymer from polymerisation by addition of one or more ethylenically unsaturated hydrophobic monomers, such as styrene, acrylic and metha-acrylic acid esters, isobutylene or derivates thereof, with one or more ethylenically unsaturated hydrophobic monomers, such as carboxylic monomers (for example, acrylic acid, metha-acrylic acid or itaconic acid); sulfonic monomers or their salts (for example, styrene sulfonic acid or acrylamide-2-methyl-propanosulfonic acid); phosphate monomers (for example, ethylene glycol phosphate methacrylate, ethylene glycol phosphate); phosphonate monomers (vinylphosfonic acid, for example); anhydrides (maleic anhydride, for example), the latter being optionally hydrolysed or modified with an alcohol or an amine.

In a particular embodiment, this amphiphilic stabilising polymer is a copolymer derived from styrene and maleic anhydride or a copolymer derived from styrene, α-methyl-styrene and acrylic acid, or a copolymer derived from styrene, 2-ethylhexyl acrylate, butyl acrylate and acrylic acid.

Other amphiphilic polymers suitable for being used in the process according to the present invention are those derived from step polymerisation such as polyurethanes and polyesters with acid functions. Suitable polyurethanes are those obtained from a polyurethane prepolymer which is the reaction product of:
(A) at least one polyisocyantate (such as isoforone diisocyanate, dicyclohexylmethane diisocyanate, or tetramethylxylilene diisocyanate),
(B) at least one organic compound comprising at least two reactive groups that can react with isocyanates (such as polyester polyols, polyether polyols, and polycarbonate polyols which have a number average molecular weight within the range of 400 to 5.000), and
(C) at least one alcohol or a polyol able to react with an isocyanate group and that comprises additional function groups susceptible to provide good dispersion in water and provide an acid function. Such an alcohol or polyol typically has functional groups such as anionic salt groups or similar precursors which may be subsequently converted to such anionic salt groups such as carboxylic or sulfonic acid groups. The carboxylate salt groups incorporated into the isocyanate-terminated polyurethane prepolymers generally are derived from hydroxycarboxylic acids represented by the general formula (HO)xR(COOH)y, wherein R represents a straight or branched hydrocarbon residue having 1 to 12 carbon atoms, and x and y independently are integers from 1 to 3. The most preferred hydroxycarboxylic acids are the α,α-dimethylolalkanoic acids, wherein x=2 and y=1 in the above general formula, such as for example, the 2,2-dimethylolpropionic acid.

In a particular embodiment, the amphiphilic stabilising polymer has a solubility in the aqueous phase of the mini-emulsion of at least 10⁻² g/l, preferably of at least 10⁻¹g/l, and more preferably of at least 1 g/l.

In another particular embodiment, the amphiphilic stabilising polymer is used at an amount of 0.5% to 35% in weight from the total weight of α,β-ethylenically unsaturated monomer used in both steps (i) and (ii).

In step (i) of mini-emulsion polymerisation, the quantity of amphiphilic stabilising polymer used should be preferably below 3% in weight, more preferably below 1.5% in weight, from the total weight of α,β-ethylenically unsaturated monomer used in both steps (i) and (ii). More in particular, in this step (i), the quantity of amphiphilic stabilising polymer should be preferably at least 1 % in weight, more preferably of at least 2% by weight based on the total weight of an α,β-ethylenically unsaturated monomer used in this step (i).

In the step (ii) of emulsion polymerisation, the amount of amphiphilic stabilising polymer used should be preferably of at least 5% in weight, more preferably of at least 10% in weight, from the total weight of α,β-ethylenically unsaturated monomer used in both steps (i) and (ii).

On the other hand, in the context of the invention, the amphiphilic stabilising polymer is suitable for use in each of the two steps of the invention procedure. Therefore, in a particular embodiment, the amphiphilic stabilising polymer is used in step (i) of mini-emulsion polymerisation at an amount of 2% to 25% in weight from the total weight of the amphiphilic stabilising polymer used.

The term "hydrophobic co-stabiliser" as used in the invention procedure relates to a compound that is simultaneously highly insoluble in water and highly soluble in α,β-ethylenically unsaturated monomer(s). The hydrophobic co-stabiliser used in the invention procedure has generally a water solubility of less than 5.10⁻⁵ g/l, preferably of less than 5.10⁻⁶ g/l (measured at 25 °C).

Suitable hydrophobic co-stabilisers for the invention procedure are hydrocarbons, especially alkanes or cycloalkanes, containing at least 12 carbon atoms (for example hexadecane or octadecane), long-chain alcohols (for example, hexadecanol or octadecanol), halogenated hydrocarbons, organosilicon compounds, long-chain esters, oils such as vegetable oils (for example olive oil), hydrophobic dye molecules, capped isocyanates, and also oligomeric products of polymerisation, polycondensation or polyaddition. Other suitable polymer co-stabilisers have been described, for example, in US patent 5,686,518.

According to a particular embodiment of the process disclosed in the present invention, a reactive hydrophobic co-stabiliser can be also used, alone or in addition to a non-reactive hydrophobic co-stabiliser. The term "reactive hydrophobic co-stabiliser" relates to those co-stabilisers involved in the subsequent polymerisation reaction. Examples of these compounds are hydrophobic monomers or comonomers such as stearyl acrylate and other long-chain acrylates and methacrylates, macromonomers; hydrophobic chain transfer agents, such as dodecyl mercaptane, octadecyl mercaptane and other long-chain mercaptanes, or even hydrophobic initiators such as 2,5-dimethyl-2-5-di(2-ethylhexanoylperoxi) hexane and other long-chain azo, peroxide or hydroperoxide initiators. The disclosed procedure offers particular advantages over the alternative use of UV-curing monomers, such as potential hydrophobic monomers which are found, for instance, under the trade names Actilanec®, acrylate monomers, (Akzo Nobel Resins) or Tone® (Union Carbide/Dow).

The hydrophobic co-stabiliser used in the process according to the invention is preferably chosen from alkanes or alcohols containing 12 to 24 carbon atoms, particularly hexadecane, and from among acrylates containing 18 to 22 carbon atoms, and their mixtures. A mixture of acrylates is marketed, for instance, under the trade name of Norsocryl^{™} A-18-22 (ATOFINA).

Generally, the hydrophobic co-stabiliser is added at an amount of 0.05% to 40% in weight, preferably from 0.1% to 10% in weight, most preferably from 0.2% to 5% in weight, based on the total weight of monomers of the mixture prepared in step (a) of the invention procedure. In the special case wherein hydrophobic (co)-monomers such as those described above that function both as hydrophobic co-stabilisers and as α,β-ethylenically unsaturated monomers, the quantity of such hydrophobic (co)-monomer can be in the order of 70% in weight based on the total weight of the mixture prepared in step (a).

When the hydrophobic co-stabiliser is not a (co)-monomer, this hydrophobic co-stabiliser is added preferably in an amount of 0.1% to 10% in weight, more preferably from 0.2% to 8% in weight, and most preferably from 0.5% to 5% in weight, based on the total weight of monomers of the mixture prepared in step (a).

The hydrophobic co-stabiliser is preferentially used exclusively in the described step (i) of mini-emulsion polymerisation.

α,β-ethylenically unsaturated monomers that can be used in both steps (i) and (ii) of the invention procedure are those that exhibit a low water solubility. Generally, α,β-ethylenically unsaturated monomers exhibit a water solubility of less than 15%, preferably less than 5%, and most preferably less than 3%. The solubilities of these monomers are measured at 25°C and express the grams of monomer dissolved in 100 grams of water.

Suitable α,β-ethylenically unsaturated monomers are alkyl acrylates or alkyl methacrylates (for example, methyl acrylate, methyl methacrylate, ethyl acrylate, ethyl methacrylate, n-butyl acrylate, n-butyl methacrylate, 2-ethylhexyl acrylate, cyclohexyl methacrylate, 2-ethylhexyl methacrylate, estearyl methacrylate, isobornyl methacrylate, and lauryl methacrylate), polymerisable aromatic compounds (for example styrene, α-methyl styrene, vinyl toluene and t-butyl styrene), polymerisable nitriles (for example acrylnitrile and methacrylnitrile), polymerisable amide compounds, α-olephinic compounds such as ethylene, vinyl compounds such as vinyl acetate, vinyl propionate and longer chain vinyl ester homologues; vinyl esters, vinyl and vinylidene halides, diene compounds such as butadiene and isoprene. Other suitable α,β-ethylenically unsaturated monomers are those with fluorine or silicon atoms, such as 1H, 1H, 5H-octafluoropentyl acrylate or trimethylsiloxyethyl acrylate.

Preferably, α,β-ethylenically unsaturated monomers are chosen from among styrenes, acrylates, methacrylates, vinyl and vinylidene halides, dienes, vinyl esters and their mixtures. Particularly preferred are: methyl methacrylate, styrene, vinyl acetate, methyl acrylate, butyl acrylate, ethyl acrylate, 2-ethylhexyl acrylate, butadiene and vinyl chloride.

The quantity of α,β-ethylenically unsaturated monomers used in the invention procedure is generally 10% to 70%, preferably from 18% to 60% in weight, based on the total weight of the mixture of step (a).

According to another embodiment of the procedure described herein, one or more water soluble monomers (hereafter designated as "secondary monomers") may be added to the mixture formed during step (a) or to the mixture formed in step (e), in addition to the α,β-ethylenically unsaturated monomer(s). These secondary monomers are generally ethylenically unsaturated organic compounds polymerisable by addition which have a water solubility higher than 15% and that are only used at a small percentage in the monomer mix and only in the presence of at least one α,β-ethylenically unsaturated monomer, such as described above.

The percentage of secondary monomer present in the monomer mix preferably does not exceed 6% in weight, more preferably 0% to 4% in weight, and more preferably of 0% to 2% in weight, based on the total weight of monomer used in both steps (i) and (ii). Examples of secondary monomers are: acrylic acid, metha-acrylic acid, 2-sulfoethyl methacrylate, and maleic anhydride. The use of secondary monomers may impart desired properties to the coatings produced when using the polymer dispersions obtained by the process according to this invention.

In another embodiment of the invention, at least one surfactant chosen among anionic, cationic and non-ionic surfactants is added to the mixture formed in step (a) or to the mixture formed in step (e). Suitable surfactants include alkyl sulphates, such as sodium lauryl sulphate, alkyl, aryl and aryl-alkyl sulphates such as sodium dodecyl benzene sulphonate, fatty acids salts such as sodium stearate; poly(vinyl alcohol), or fatty alcohol polyglycol ethers such as ethoxylated linear fatty alcohols containing from 10 to 100 units of ethylene oxide.

The amount of surfactant generally does not exceed 2% by weight based on the total weight of monomer used in both steps (i) and (ii). Preferably the amount of surfactant does not exceed 1% by weight, and even more preferably, the amount of surfactant does not exceed 0.5% by weight based on the total weight of monomer used in both steps (i) and (ii).

The mixture formed in step (a) or the mixture of step (e) can also contain one or more components modifying the pH. In particular, when the amphiphilic stabilising polymer contains carboxylic acid functions, it may be necessary to prepare and polymerise the mini-emulsion at a high pH for the stabilising polymer to exhibit the appropriate amphiphibicity. In this case, an adequate pH range is 6.0 to 10.0, depending on the nature of the other components of the polymer. Another preferred pH range is 7.5 to 10.0. When the stabilising polymer contains acid functions derived from sulfonic acid, sulphate, phosphate or phosphonate, a suitable range of pH is 2.0 to 10.0.

Compounds capable of adjusting pH include: ammonia, amines, (triethyl amine, triethanol amine or dimethylamine hydroxypropane, for instance), carbonate salts (for instance, sodium carbonate), bicarbonate salts (for example, sodium bicarbonate), hydroxides (for example, sodium hydroxide) or oxides (for example, calcium oxide). The pH adjusting compound is preferably selected among ammonia and sodium hydroxide.

The pH-adjusting compound can be added during step (a) or during step (e). Preferably, the pH adjusting compound is added to amphiphilic stabilising polymer before using it in step (a) or in step (e). This pH adjusting compound that can be added during steps (a) and (e) can be the same or not.

The formation of the mixture in step (a) of the invention procedure is preferably made mixing a premixture (1) comprising the amphiphilic stabilising polymer and water with a premixture (2) comprising the hydrophobic co-stabiliser and the α,β-ethylenically unsaturated monomer(s).

The premixture (1) is generally prepared adding to the amphiphilic stabilising polymer to water, preferably at a temperature from 0 °C to 100 °C. To this premixture (1) one or more surfactants can be optionally added, as previously described, one or more secondary monomers soluble in water as previously described, a pH adjusting compound and/or a polymerisation initiator.

When an amphiphilic stabilising polymer containing carboxylic acid functions is used in the invention procedure, it is preferred to prepare a premixture (1) comprising a pH-adjusting compound as above described so that the solution of the amphiphilic stabilising polymer in this premixture (1) is at least 10⁻² g/l (measured at 25 °C), more preferably at least 10⁻¹ g/l, and more preferably at least 1 g/l. In this case, it is particularly preferred to add this pH-adjusting compound to the amphiphilic compound before adding water to it, and, optionally, the other components of the premixture (1).

The premixture (2) is generally prepared adding the intended amount of hydrophobic co-stabiliser to the α,β-ethylenically unsaturated monomer(s), preferably under gentle stirring. This premixture is generally prepared at room temperature, preferably until a clear solution is obtained. To this premixture (2) one or more water soluble secondary monomers can optionally be added as described previously and/or a polymerisation initiator.

The formation of the mix during step (a) of the invention procedure is performed generally at a temperature from 0 °C to 100 °C, preferably at room temperature.

The mix obtained in step (a) is then subjected, in step (b) of the invention procedure, to homogenisation techniques to form a mini-emulsion that comprises stabilised droplets with a mean diameter from 10 to 1000 nm.

The term "mini-emulsion", as used in this application, relates to a monomer emulsion where the mean diameter of a droplet is from 10 to 1000 nm. This term is used to distinguish the conventional monomer emulsion and emulsion polymerisation methods, where the size of droplets or micelles is greater, usually 1 to 10 µm.

The diameter of the droplets is measured using a light dynamic dispersion device, such as a Coulter^{™} N4 Plus or Nicomp 380 ZLS device. The preparation of the sample involves the dilution of a sample of mini-emulsion with deionised water or preferably with deionised water saturated with the monomer(s) present in the mini-emulsion. The size of the droplets is directly measured after the preparation of the sample, in all cases within 15 minutes.

Step (b) of the invention procedure is carried out preferably so that a mini-emulsion is obtained where the droplets have a mean diameter of less than 600 nm, more preferably less than 400 nm, even more preferably less than 300 nm. Step (b) is carried out preferably so that a mini-emulsion is obtained where the droplets have a mean diameter of 80-600 nm.

In step (b) the mix is subjected to homogenisation or high stress techniques. Stress is defined as force per area unit. A method to exert this stress is through shearing. Shearing means that the force is such that one layer or plane moves parallel to another adjacent one. Stress can be also exerted from all sides as a bulk, or compression stress, so that the stress is exerted without almost any shear. Another method to exert the stress is by cavitation, which occurs when the pressure within a liquid is reduced enough to cause vaporisation. The formation and collapse of the vapour bubbles occurs violently over a short time period and causes a significant stress. Finally, another method to exert a stress is by using ultrasonic energy.

In step (b) of the invention procedure, it,is preferred to use an equipment that can cause localized shear, preferably together with moderate bulk mixing. More preferably, high shear mixing is obtained using an ultrasound treatment, colloid mill and/or a homogeniser.

The temperature used during step (b) of the invention procedure is, in general, any temperature between the freezing point and the boiling point of the mix and its components. The preferred temperature for the formation of the mini-emulsion of monomers ranges from 20 °C to 50° C, most preferentially room temperature.

The result of step (b) is the formation of an essentially stable mini-emulsion that comprises a continuous aqueous phase and droplets comprising the α,β-ethylenically unsaturated monomer(s) and the hydrophobic co-stabiliser; these droplets are also called disperse phase. It is considered that substantially all or at least most of the amphiphilic stabilising polymer is located in the interface between the droplets and the aqueous medium or close to it. The solubility of the stabilising polymer in the monomer, when the stabilising polymer is in deprotonated state is usually of less than 2% by weight, preferably less than 1% by weight based on monomer weight.

The term "essentially stable mini-emulsion" means that its shelf-life is long enough for the content in monomer in the emulsion to be polymerised in less time than that required for phase separation. The min-emulsions obtained by the invention procedure generally show a shelf-life of over 24 h, even several days.

In step (c) of the invention process, the monomer(s) are polymerised within the droplets. The monomer(s) are generally polymerised under free radical polymerisation conditions. In a preferred embodiment of the invention procedure, the polymerisation of step (c) is performed in the presence of a free radical initiator. The polymerisation initiator can be a water soluble or an oil soluble compound. In the state of the art suitable free radical initiators are known. These include for example organic peroxides such as benzoyl peroxide, lauroyl peroxide, ter-butyl hydroperoxide, 2,5-dimethyl 2,5-di(2-ethylhexanoyperoxi) hexane and dicumyl peroxide; inorganic persulphates such as potassium persulphate or ammonium persulphate; and azo initiators such as azobis-(isobutyro nitrile) (AIBN) and azobis (1-cyclohexanecarbonitrile); and redox pairs such as Fe²⁺/H₂O₂; ROH/Ce⁴⁺ (where R is an organic group such as C1-C6 alkyl or C5-C8 aryl) and K₂S₂O₈/Fe²⁺.

The free radical initiator can be added to the mini-emulsion obtained after step (b), or before step (b) and/or during step (b), of the procedure described in this application. The free radical initiator is added in step (e) of the procedure described in this application. The free radical initiator is added preferably to the premixture (2) used in step (a) of the invention process in the cases where the solubility of the initiator in premixture (2) is higher than in the premixture (1). In the cases where the solubility of the initiator in the premixture (1) is higher than in the premixture (2), the initiator can be added to the mix formed in step (a) or during or after step (b) of the invention procedure. In this case, it is preferably added to the mini-emulsion obtained after step (b).

During step (c) of the invention procedure, it may be necessary to add a pH adjusting compound such as described for steps (a) and (e), in order to keep the stabilising polymer in amphiphilic state. This is the particular case where the pH decreases during the reaction. This may be due to the dissolution of the persulphate initiators (for example ammonium persulphate) or to the evaporation of the pH adjusting compound present in the mixture formed in step (a) (when ammonium is used, for example). The pH adjusting compound added during step (c) can be the same as that added during step (a) or a different one.

In general, the polymerisation of steps (c) and (f) can be carried out over a broad temperature range, spanning approximately 20 °C to 90 °C. The preferred polymerisation temperature will depend on the initiator chosen. In any case, the preferred polymerisation temperature range spans approximately 25 °C to 80°C.

The polymerisation of steps (c) and (f) of the invention procedure is carried out usually in a time period from 10 min to 24 h.

The aqueous polymer dispersion, or polymer latex, obtained after step (c) of the invention procedure generally contains polymer particles with an average diameter of a range of approximately 10 to approximately 1000 nm. The aqueous polymer dispersion, frequently called polymer dispersion or polymer latex, preferably contains polymer particles with a mean diameter within the range from 80 to 400 nm.

The polymer latexes obtained by step (i) of the invention procedure offer the advantage of having an improved machine runnability. Furthermore, they have a good storage stability that generally exceeds 6 months or even longer. Surprisingly, the authors have described that the latex obtained by step (i) of the procedure herein can be used in a second step (ii) that is described below. The resin-fortified aqueous polymer dispersions obtained according to the procedure of the present invention show marked characteristics with regard to enhanced gloss, pigment wetting dispersibility, block resistance, improved substrate wetting, outstanding mechanical and shear stability, and high freeze/thaw stability, and high polymer volume fraction.

It has been discovered that the aqueous polymer dispersion obtained using the amphiphilic stabilising polymer used in the first step (i) of the invention procedure and that obtained according to the procedure described in patent application EP 03002805.4, does not have the desired final characteristics of the resin-fortified aqueous polymer obtained by the procedure herein. This aqueous polymer dispersion obtained by the mini-emulsion polymerisation of step (i), however, is surprisingly useful as initial charge of a process of emulsion polymerisation of step (ii) that is a preferred embodiment of the two-step procedure described in this application.

Step (ii) of the two-step procedure of the invention herein comprises the step of initially charging the reactor with the aqueous polymer dispersion obtained in step (i). The total volume of the starting aqueous polymer dispersion usually varies between 10% and 70%, preferably between 30% and 50% from the total final product volume.

This step (ii) of the two-step procedure of the invention herein comprises, in addition, the step of addition of at least one α,β-ethylenically unsaturated monomer. It is well known to those skilled in the art that some of the characteristics of the final product are determined by the choice of the types of monomers used. Equally, an amphiphilic stabilising polymer and a free-radical generator, as defined in the present invention, are charged into the reactor. Preferably, the addition is carried out on a semicontinuous basis. The amount of amphiphilic stabilising polymer added in step (ii) of emulsion polymerisation of the invention process is usually from 5% to 35% by weight, preferably from 10% to 25% by weight based on the total mass of polymer present in the final aqueous polymer dispersion. The amounts of monomer and polymer stabiliser used in (ii) of the two-step procedure of the invention herein can be adapted in order to adjust the viscosity and final solid content intended for the fortified latex. Preferably, the amounts are chosen to obtain a product with a total solid content in the range within 55% to 70%, more preferably from 58% to 65% and a viscosity exceeding at least 2Pa.s, to assure the adequate wetting dispersibility of the intended resin-fortified aqueous polymer dispersion.

The following examples are provided for a better understanding of the invention. In no case they must be considered as a limitation to the scope of the same.

### EXAMPLES

### Example 1:

### 1.1 Preparation of an aqueous solution of amphiphilic stabilising polymer 300 g of a styrene copolymer, α-methyl styrene, and acrylic acid were added, with Mn of 6500 and an acid number within the range from 193 to 215 (Morez^{™}101 resin, marketed by Rohm & Haas), to a mixture of 89.5 g of ammonia (25% w/w) and 625 g of demineralised water under stirring. The solution was then heated to 70°C and was stirred until the Morex resin was completely dissolved. The resulting solution had a solid content of 29.7% (w/w).

### 1.2 Preparation of an organic solution containing an hydrophobic co-stabiliser and an α,β-ethylenically unsaturated monomer, according to the patent application EP 03002805.4:

5.0 g of acrylate C18-C22 Norsocryl and 2.5 g of Luperox 256 (ATOFINA) were dissolved in a mixture of 120 g of methyl methacrylate and 130 g of butyl acrylate.

### 1.3 Preparation of the mixture:

16.68 g of the aqueous solution prepared in section 1.1 were mixed with 238.3 g demineralised water. Then, the organic solution of C18-C22 acrylate Norsocryl and Luperox 256 in the acrylic monomers prepared in 1.2 was added to this aqueous solution while stirring (using a magnetic stirring bar at 1000 rpm). The stirring of this mixture was continued for 10 minutes.

### 1.4 Preparation of the mini-emulsion:

The resulting mix obtained in section 1.3 was subject then to ultrasound treatment using a Branson Sonifier 450 device (output control at 8 and duty cycle of 90%) for 5 minutes. The resulting mini-emulsion had a droplet size of approximately 200 nm.

### 1.5 Polymerisation:

The mini-emulsion obtained in section 1.4 was transferred to a glass reactor fitted with a mechanical shaker, nitrogen inlet and temperature control by waterbath. Polymerisation was carried out for 4 hours at 70 °C.

The resulting polymer dispersion had a particle size of approximately 250 nm and contained negligible amounts of coagulum, with a solid content of 50%.

### Example 2

### 2.1 Preparation of an aqueous solution of amphiphilic stabilising polymer:

300 g of a styrene copolymer, α-methyl styrene and acrylic acid, with Mn of 1200 and acid number of 235 (Morez^{™}300 resin, marketed by Rohm & Haas) were added to a mixture of 102 g of ammonium (25% w/w) and 625 g of demineralised water under stirring. The solution was then heated to 70 °C and continuous stirring until the Morez resin was completely dissolved. The resulting solution had a solid content of 29.3% (w/w).

### 2.2 Preparation of an organic solution containing a hydrophobic co-stabiliser and an α,β-ethylenically unsaturated monomer according to the patent application EP 03002805.4:

5.0 g of C18-C22 acrylate Norsocryl and 2.5 g of Luperox 256 (ATOFINA) were dissolved in a mixture of 120 g of methyl methacrylate and 130 g of butyl acrylate.

### 2.3 Preparation of the mixture:

16.68 g of the aqueous solution prepared in section 1.1 were mixed with 238.3 g demineralised water. Then, the organic solution of C18-C22 acrylate Norsocryl and Luperox 256 in the acrylic monomers prepared in section 1.2 was added to this aqueous solution while stirring (using a magnetic stirring bar at 1000 rpm). The stirring of this mixture was continued for 10 minutes.

### 2.4 Preparation of the mini-emulsion:

The resulting mixture obtained in section 2.3 was then subjected to ultrasound treatment using a Branson Sonifier 450 (output control at 8 and a duty cycle of 90%) for 5 minutes. The resulting mini-emulsion had a droplet size of approximately 200 nm, as measured by light scattering using a Coulter N4 Plus.

### 2.5 Polimerysation: The mini-emulsion obtained in section 2.4 was transferred to a glass reactor equipped with a mechanical stirrer, nitrogen inlet and with temperature control carried out by means of a waterbath. The polymerisation was carried out for 4 hours at 70 °C.

The resulting polymer dispersion had a particle size of 240 nm and contained negligible amounts of coagulum, and a solids content of 49%.

### Example 3

260 g of the aqueous polymer dispersion prepared in example 1.5 were mixed with 30 g of the resin solution prepared in example 1.1 and with 1.52 g of ammonium persulphate and 1.4 g of NaHCO₃ dissolved in 80 g of doubly deionised water. This mixture was charged to a glass reactor and heated to the polymerisation temperature, set at 80 °C.

Then a solution containing 102.1 g of methyl methacrylate and 110 g of butyl acrylate was added by means of a meter pump to the reactor during 120 minutes. A stream of 98 g of the resin solution prepared in example 1.1 was added to the reactor for the same time.

The final latex obtained in the two step procedure had a solids content of 58%, low viscosity and no coagulum was obtained at the end of the reaction.

### Example 4:

Example 3 was repeated, where the initial charge of the latex obtained according to example 1.5 was replaced by the latex obtained according to example 2.5. The final latex obtained in the two step procedure had a solids content of 57%, low viscosity and no coagulum was obtained at the end of the reaction.

### Example 5:

Example according to the known state of the art.

105 g of doubly deionised water were mixed with 178 g of the resin solution obtained according to example 1.1. To this mixture a solution of 3.8 g doubly deionised water and 0.58 g of ammonium persulfate was added and charged to a glass reactor with temperature controlled at 80 °C. A stream of 270 g of styrene was added to the reactor for a period of 120 minutes. After cooling the reaction media, a latex with particle size measured by light scattering using a Coulter N4 Plus of 70nm was obtained. The total solids content of the latex, measured by gravimetry, was 53%. In order to further illustrate the advantages of the resin-fortified aqueous polymer dispersion obtained according to the procedure herein disclosed, the rewetting performance of the latexes was compared. Accordingly, films from the latexes obtained according to examples 1.5, 2.5 (mini-emulsion polymerisation) and 5 (emulsion polymerisation) were cast on a glass substrate. The films were dried by means of a hot air blower. Next, droplets of the same latexes were poured on the film obtained and the film was slightly scrubbed. Rewetting was only observed with the film formed from the latex obtained in example 5. Upon gently scrubbing the latex obtained in examples 1.5 and 2.5 on the respective films, coagulum was formed. The rewet analysis was repeated with the resin-fortified aqueous polymer dispersion obtained in examples 3 and 4, according to the present invention. Similarly to the results obtained for the latex produced according to example 5, upon gently scrubbing the latexes obtained in examples 3 and 4 and their respective films it was possible to rewet them without forming polymer coagula. The latex obtained by the two-step procedure herein disclosed differs from the latex obtained according to the process of the state-of-the-art of example 5, among other characteristics previously described, by its increased solids content at an equivalent value of the latex viscosity, and the usage of a significantly lower amount of the amphiphilic stabilising polymer.

## Claims

1. Procedure for the preparation of a resir fortified aqueous polymer dispersion, **characterised in that** it comprises the steps of:
(a) Forming a mixture comprising water, at least one amphiphilic stabilising polymer, at least one hydrophobic co-stabsiiser, and at least one α,β-ethylenically unsaturated monomer;
(b) subjecting the mixture formed in step (a) to homogenisation so as to form a mini-emulsion comprising stabilised droplets having an average diameter of 10 to 1000 nm and comprising at least one hydrophobic co-stabiliser and at least one α,β-ethylenically unsaturated monomer, dispersed in an aqueous phase;
(c) polymerising the monomer within the droplets to obtain an aqueous polymer dispersion,
(d) charging into a reactor the aqueous polymer dispersion obtained in step (c);
(e) charging into said reactor at least one α,β-ethylenically unsaturated monomer, at least one amphiphilic stabilising polymer and at least one free-radical generator; and
(f) polymerising the mixture obtained in step (e).

2. Procedure according to claim 1, **characterised in that** the addition of the compounds of step (e) is carried out as pre-emulsion or in separate streams, preferably separate streams.

3. Procedure according to claims 1-2 **characterised in that** the amphiphilic stabilising polymer has an average molecular weight by number, Mn, of 800-100000, preferably 900-50,000, more preferably 1000-25000; and an acidity index of 50-400 mg KOH/g, preferably of 100-350 mg KOH/g, more preferably of 150-300 mg KOH/g.

4. Procedure according to claim 3, **characterised in that** the amphiphatic stabilising polymer is a polymer derived from a combination of hydrophobic monomers and hydrophilic monomers incorporating acid functions or acid precursor functions, preferably the combination of an ethylenically unsaturated hydrophobic monomer and an ethylenically unsaturated hydrophilic monomer with functions of carboxylic acid, sulfonic acid, carboxylate, sulphonate, phosphate, phosphonate or anhydride, optionally hydrolysed or modified by an alcohol or an amine; or the combination of a polyurethane with a polyester with an acid function.

5. Procedure according to claim 4, **characterised in that** the amphiphilic stabilising polymer is a copolymer derived from styrene and maleic anhydride or a copolymer derived from styrene, α-methyl-styrene and acrylic acid, or a copolymer derived from styrene, 2-ethylhexyl acrylate, butyl acrylate and acrylic acid.

6. Procedure according to claims 3-5, **characterised in that** the amphiphilic stabilising polymer has a solubility in the aqueous phase of the mini-emulsion of at least 10⁻² g/l, preferably of at least 10⁻¹ g/l, and more preferably of at least 1 g/l.

7. Procedure according to claims 3-6 **characterised in that** the amphiphilic stabilising polymer is used at an amount of 0.5% to 35% by weight based on the total weight of α,β-ethylenically unsaturated monomer.

8. Procedure according to claims 3-7, **characterised in that** the amphiphilic stabilising polymer is used in step (i) of mint emulsion polymerisation at an amount from 2% to 25% by weight based on the total weight of the amphiphilic stabilising polymer.

9. Procedure according to claims 1-8, **characterised in that** the α,β-ethylenically unsaturated monomer is chosen among styrenes, acrylates, methacrylates, vinyl and vinyldene halides, dienes, vinyl esters ar d their mixtures.

10. Procedure according to claim 9, **characterised in that** the α,β-ethylenically unsaturated monomer has a water solubility of less than 15%.

11. Procedure according to claims 1-10, **characterised in that** a secondary monomer with a water solubility higher than 15% is added to the mixture of step (a) or to the mixture of step (e) at amount of less than 6% by weight based on the total monomer weight.

12. Procedure according to claims 1-11, **characterised in that** a surfactant is added to the mixture of step (a) or to the mixture of step (e) at amount of less than 2% by weight based on the total monomer weight, choosing this surfactant among an anionic tensioactive, a cationic tensioactive, and a non-ionic tensioactive.

13. Procedure according to claims 1-12, **characterised in that** one or more pH-modifying components are added to the mixture of step (a) or to the mixture of step (e).

14. Procedure according to claims 1-13, **characterised in that** step (b) is performed so that a mini-emulsion is formed that corr prises stabilised droplets with a mean diameter of 80-600 nm.

15. Procedure according to claims 1-15, **characterised in that** polymerisation in step (c) is performed in the presence of an initiator.

## Patentansprüche

1. Verfahren zur Herstellung einer harzverstärkten wässrigen Polymerdispersion,
**dadurch gekennzeichnet, dass** es die Schritte umfasst:
(a) Bilden einer Mischung umfassend Wasser, wenigstens ein amphiphiles stabilisierendes Polymer, wenigstens einen hydrophoben Costabilisator und wenigstens ein α,β-ethylenisch ungesättigtes Monomer;
(b) Unterwerfen der in Schritt (a) gebildeten Mischung einer Homogenisation, so dass eine Miniemulsion gebildet wird, umfassend stabilisierte Tröpfchen mit einem mittleren Durchmesser von 10 bis 1000 nm und umfassend wenigstens einen hydrophoben Costabilisator und wenigstens ein a,β-ethylenisch ungesättigtes Monomer, dispergiert in einer wässrigen Phase;
(c) Polymerisieren des Monomers innerhalb der Tröpfchen, um eine wässrige Polymerdispersion zu erhalten;
(d) Einfüllen der in Schritt (c) erhaltenen wässrigen Polymerdispersion in einen Reaktor;
(e) Einfüllen von wenigstens einem a,β-ethylenisch ungesättigten Monomer, wenigstens einem amphiphilen stabilisierenden Polymer und wenigstens einem Radikalerzeuger in den Reaktor; und
(f) Polymerisieren der in Schritt (e) erhaltenen Mischung.

2. Verfahren nach Anspruch 1, **dadurch gekennzeichnet, dass** die Zugabe der Verbindungen von Schritt (e) als Voremulsion oder in getrennten Strömen, vorzugsweise in getrennten Strömen, erfolgt.

3. Verfahren nach den Ansprüchen 1-2, **dadurch gekennzeichnet, dass** das amphiphile stabilisierende Polymer ein Molekulargewicht-Zahlenmittel, Mn, von 800-100000, vorzugsweise 900-50000, mehr bevorzugt 1000-25000; und einen Aziditätsindex von 50-400 mg KOH/g, vorzugsweise von 100-350 mg KOH/g, mehr bevorzugt von 150-300 mg KOH/g aufweist.

4. Verfahren nach Anspruch 3, **dadurch gekennzeichnet, dass** das amphiphile stabilisierende Polymer ein Polymer ist, das abgeleitet ist von einer Kombination von hydrophoben Monomeren und hydrophilen Monomeren, in die Säurefunktionen oder Säurevorstufenfunktionen eingebaut sind, vorzugsweise der Kombination von einem ethylenisch ungesättigten hydrophoben Monomer und einem ethylenisch ungesättigten hydrophilen Monomer mit Funktionen von Carbonsäure, Sulfonsäure, Carboxylat, Sulfonat, Phosphat, Phosphonat oder Anhydrid, gegebenenfalls hydrolysiert oder durch einen Alkohol oder ein Amin modifiziert; oder der Kombination von einem Polyurethan mit einem Polyester mit einer Säurefunktion.

5. Verfahren nach Anspruch 4, **dadurch gekennzeichnet, dass** das amphiphile stabilisierende Polymer ein von Styrol und Maleinsäureanhydrid abgeleitetes Copolymer oder ein von Styrol, α-Methyl-styrol und Acrylsäure abgeleitetes Copolymer oder ein von Styrol, 2-Ethylhexylacrylat, Butylacrylat und Acrylsäure abgeleitetes Copolymer ist.

6. Verfahren nach den Ansprüchen 3-5, **dadurch gekennzeichnet, dass** das amphiphile stabilisierende Polymer eine Löslichkeit in der wässrigen Phase der Miniemulsion von wenigstens 10⁻² g/l, vorzugsweise von wenigstens 10⁻¹ g/l und mehr bevorzugt von wenigstens 1 g/l aufweist.

7. Verfahren nach den Ansprüchen 3-6, **dadurch gekennzeichnet, dass** das amphiphile stabilisierende Polymer in einer Menge von 0,5 bis 35 Gew.-%, bezogen auf das Gesamtgewicht an α,β-ethylenisch ungesättigtem Monomer, verwendet wird.

8. Verfahren nach den Ansprüchen 3-7, **dadurch gekennzeichnet, dass** das amphiphile stabilisierende Polymer in Schritt (i) der Miniemulsionspolymerisation in einer Menge von 2 bis 25 Gew.-%, bezogen auf das Gesamtgewicht des amphiphilen stabilisierenden Polymers, verwendet wird.

9. Verfahren nach den Ansprüchen 1-8, **dadurch gekennzeichnet, dass** das α,β-ethylenisch ungesättigte Monomer ausgewählt ist aus Styrolen, Acrylaten, Methacrylaten, Vinyl- und Vinylidenhalogeniden, Dienen, Vinylestern und ihren Mischungen.

10. Verfahren nach Anspruch 9, **dadurch gekennzeichnet, dass** das α,β-ethylenisch ungesättigte Monomer eine Wasserlöslichkeit von weniger als 15 % aufweist.

11. Verfahren nach den Ansprüchen 1-10, **dadurch gekennzeichnet, dass** ein sekundäres Monomer mit einer Wasserlöslichkeit, die höher als 15 % ist, zu der Mischung von Schritt (a) oder zu der Mischung von Schritt (e) in einer Menge von weniger als 6 Gew.-%, bezogen auf das Gesamtmonomergewicht, zugegeben wird.

12. Verfahren nach den Ansprüchen 1-11, **dadurch gekennzeichnet, dass** eine oberflächenaktive Substanz zu der Mischung von Schritt (a) oder zu der Mischung von Schritt (e) in einer Menge von weniger als 2 Gew.-%, bezogen auf das Gesamtmonomergewicht, zugegeben wird, wobei diese oberflächenaktive Substanz unter einem anionischen Tensid, einem kationischen Tensid und einem nichtionischen Tensid ausgewählt ist.

13. Verfahren nach den Ansprüchen 1-12, **dadurch gekennzeichnet, dass** eine oder mehrere pH-modifizierende Komponenten zu der Mischung von Schritt (a) oder zu der Mischung von Schritt (e) zugegeben werden.

14. Verfahren nach den Ansprüchen 1-13, **dadurch gekennzeichnet, dass** Schritt (b) so durchgeführt wird, dass eine Miniemulsion gebildet wird, welche stabilisierte Tröpfchen mit einem mittleren Durchmesser 80-600 nm umfasst.

15. Verfahren nach den Ansprüchen 1-15, **dadurch gekennzeichnet, dass** die Polymerisation in Schritt (c) in Gegenwart eines Initiators durchgeführt wird.

## Revendications

1. Procédé de préparation d'une dispersion polymère aqueuse renforcée par de la résine, **caractérisé en ce qu'**il comprend les étapes consistant à :
(a) former un mélange renfermant de l'eau, au moins un polymère stabilisant amphiphile, au moins un co-stabilisant hydrophobe et au moins un monomère à insaturation α, β-éthylénique,
(b) soumettre le mélange formé à l'étape (a) à une homogénéisation pour former une mini-émulsion renfermant des gouttelettes stabilisées ayant un diamètre moyen de 10 à 1000 nm et comprenant au moins un co-stabilisant hydrophobe et au moins un monomère à insaturation α, β-éthylénique, dispersé dans une phase aqueuse,
(c) polymériser le monomère dans les gouttelettes pour obtenir une dispersion polymère aqueuse,
(d) charger la dispersion polymère aqueuse obtenue à l'étape (c) dans un réacteur,
(e) charger dans ce réacteur au moins un monomère à insaturation α, β-éthylénique, au moins un polymère stabilisant amphiphile, et au moins un générateur de radicaux libres, et
(f) polymériser le mélange obtenu à l'étape (e).

2. Procédé conforme à la revendication 1,
**caractérisé en ce que**
l'addition des composés de l'étape (e) est mise en oeuvre sous forme de pré-émulsion ou en flux séparés, de préférence en flux séparés.

3. Procédé conforme aux revendications 1-2,
**caractérisé en ce que**
le polymère stabilisant amphiphile a un poids moléculaire en nombre Mn de 800-100.000, de préférence 900-50.000, plus préférentiellement 1000-25.000 et un indice d'acidité de 50-400 mg KOH/g, de préférence de 100-350 mg KOH/g, plus préférentiellement de 150-300 mg KOH/g.

4. Procédé conforme à la revendication 3,
**caractérisé en ce que**
le polymère stabilisant amphiphile est un polymère dérivé d'une combinaison de monomères hydrophobes et de monomères hydrophiles ayant des fonctions acide ou des fonctions précurseur d'acide, de préférence la combinaison d'un monomère hydrophobe à insaturation éthylénique et d'un monomère hydrophile à insaturation éthylénique ayant des fonctions acide carboxylique, acide sulfonique, carboxylate, sulfonate, phosphate, phosphonate, ou anhydride, le cas échéant hydrolysées ou modifiées par un alcool ou une amine, ou la combinaison d'un polyuréthane avec un polyester ayant une fonction acide.

5. Procédé conforme à la revendication 4,
**caractérisé en ce que**
le polymère stabilisant amphiphile est un copolymère dérivé de styrène et d'anhydride maléique ou un copolymère dérivé de styrène, d'α-méthyl-styrène et d'acide acrylique, ou un copolymère dérivé de styrène, de 2-éthylhexyl acrylate, de butyl acrylate et d'acide acrylique.

6. Procédé conforme aux revendications 3-5,
**caractérisé en ce que**
le polymère stabilisant amphiphile a une solubilité, dans la phase aqueuse de la mini-émulsion d'au moins 10⁻² g/l, de préférence d'au moins 10⁻¹ g/l et plus préférentiellement d'au moins 1 g/l.

7. Procédé conforme aux revendications 3-6,
**caractérisé en ce que**
le polymère stabilisant amphiphile est utilisé en quantité de 0,5 % à 35 % en poids par rapport au poids total du monomère à insaturation α, β-éthylénique.

8. Procédé conforme aux revendications 3-7,
**caractérisé en ce que**
le polymère stabilisant amphiphile est utilisé dans l'étape (i) de polymérisation de la mini-émulsion en quantité de 2 % à 25 % en poids par rapport au poids total du polymère stabilisant amphiphile.

9. Procédé conforme aux revendications 1-8,
**caractérisé en ce que**
le monomère à insaturation α, β-éthylénique, est choisi parmi les styrènes, acrylates, méthacrylates, halogénures de vinyle et de vinylidène, diènes, vinyl esters et leurs mélanges.

10. Procédé conforme à la revendication 9,
**caractérisé en ce que**
le monomère à insaturation α, β-éthylénique, a une solubilité dans l'eau inférieure à 15 %.

11. Procédé conforme aux revendications 1-10,
**caractérisé en ce qu'**
un monomère secondaire ayant une solubilité dans l'eau supérieure à 15 % est ajouté au mélange de l'étape (a) ou au mélange de l'étape (e) en quantité inférieure à 6 % en poids par rapport au poids total de monomère.

12. Procédé conforme aux revendications 1-11,
**caractérisé en ce qu'**
un agent tensio-actif est ajouté au mélange de l'étape (a) ou au mélange de l'étape (e) en quantité inférieure à 2 % en poids par rapport au poids total du monomère, cet agent tensio-actif étant choisi parmi un tensio-actif anionique, un tensio-actif cationique et un tensio-actif non-ionique.

13. Procédé conforme aux revendications 1-12,
**caractérisé en ce qu'**
au moins un composé modifiant le pH est ajouté au mélange de l'étape (a) ou au mélange de l'étape (e).

14. Procédé conforme aux revendications 1-13,
**caractérisé en ce que**
l'étape (b) est mise en oeuvre de façon à former une mini-émulsion comprenant des gouttelettes stabilisées avec un diamètre moyen de 80-600 nm.

15. Procédé conforme aux revendications 1-15,
**caractérisé en ce que**
la polymérisation de l'étape (c) est mise en oeuvre en présence d'un initiateur.
